Europäisches Patentamt

European Patent Office

Office européen des brevets

(11) Publication number: **0 417 538 B1**

# EUROPEAN PATENT SPECIFICATION

(45) Date of publication of patent specification: **30.11.94**

(51) Int. Cl.5: **B01J 21/06**, B01J 23/22, B01J 23/30, B01J 37/34, B01D 53/36

(21) Application number: **90116443.4**

(22) Date of filing: **28.08.90**

(54) **Catalyst for reducing nitrogen oxides in a flue gas and method for producing said catalyst.**

(30) Priority: **11.09.89 IT 2167389**

(43) Date of publication of application:
**20.03.91 Bulletin 91/12**

(45) Publication of the grant of the patent:
**30.11.94 Bulletin 94/48**

(84) Designated Contracting States:
**AT CH DE FR GB LI SE**

(56) References cited:
EP-A- 0 128 302       EP-A- 0 220 416
EP-A- 0 314 392       EP-A- 0 317 875
WO-A-89/04717         US-A- 4 071 601
US-A- 4 687 753

(73) Proprietor: **ENTE NAZIONALE PER L'ENERGIA ELETTRICA - (ENEL)**
**Via G.B. Martini 3**
**I-00198 Roma (IT)**

(72) Inventor: **DeMichele,Gennaro**
**c/oEnel-CRTN 120,ViaA.Pisano**
**I-56100 Pisa (IT)**
Inventor: **Ouattroni,Giuseppe**
**c/oENEL-CRTN120 Via A. Pisano**
**I- 56100 Pisa (IT)**
Inventor: **Curcio,Franco**
**c/o Enel-CRTN 120 Via A.Pisano**
**I-56100 Pisa (IT)**
Inventor: **Musci,Mirella**
**c/o ENEL-CRTN, 120 Via A. Pisano**
**I-56100 Pisa (IT)**
Inventor: **Notaro,Maurizio**
**c/o ENEL-CRTN 120 Via A.Pisano**
**I-56100-Pisa (IT)**
Inventor: **Ciambelli,Paolo**
**c/o ENEL-CRTN 120,Via A. Pisano**
**I-56100 Pisa (IT)**
Inventor: **Turco,Maria**
**c/oEnel-Crtn 120 Via A.Pisano**
**I-56100 Pisa (IT)**
Inventor: **Bagnasco,Giovanni**
**c/o ENEL-CRTN, 120, Via A. Pisano**
**I-56100 Pisa (IT)**
Inventor: **Russo,Gennaro**
**c/o ENEL-CRTN 120, Via A. Pisano**
**I- 56100 Pisa (IT)**

(74) Representative: **Ferraiolo, Ruggero et al**
**FERRAIOLO RUGGERO & CO. s.n.c.**
**Via Napo Torriani, 10**
**I-20124 Milano (IT)**

**Description**

This present invention relates to a catalyst for reducing nitrogen oxides in the flue gases and methods for producing and employing said catalyst; in particular, it relates to a catalyst for the selective reduction of nitrogen oxides by means of ammonia and methods for producing and employing said catalyst.

The technical field relating to the present invention is at least the one of the control of the emissions of nitrogen oxides in the exhaust gases of the thermoelectic power plants, destructors, motor vehicles and plants for the production of nitric acid, said control being carried out by the process of catalytic selective reduction by means of ammonia.

In this field, a number of satisfactory catalysts containing metallic oxides, particularly vanadium, tungsten and molybdenum oxides, supported on titanium dioxide are known (refer, for instance, to EP-A-0317875); in general, drawbacks are entailed as oxidation of $SO_2$ into $SO_3$ and subsequent corrosion of the coldest parts of the plants as well as a limited range of the spatial speed at which such catalysts show an optimal activity.

In particular, the catalysts relating to the following documents are cited:

EP-A-0314392 discloses a catalyst supported on $TiO_2$ obtained through a solution method that gives rise to amorphous hydrate material with high specific surface subsequently thermally treated for crystallisation; the specific surface area rapidly decreases at the calcination temperature which entails the drawback of producing aggregates of crystallites providing powders having internal porosity and low specific surface area.

WO-A-8904717 discloses metallic oxide powders and their mixtures for catalytic dehydratation of hydrocarbons, the synthesis of the metallic oxides, in particular of $TiO_2$, being carried out by a $CO_2$ laser process; metal clorides are used as reactants having low absorbtion for the laser radiation and high reactivity with the sensitizers, which presents the drawback of low efficiency, while nucleation and growth kinetics entail the drawback of inhibition of formation of particles of sizes lower than few hundreds of A (250-3500 A and 5-50 $m^2$/g) as well as the syntesis of pure anatase $TiO_2$.

The claimed catalyst obviates the cited drawbacks.

It was found out that a catalyst having a high catalytic activity is a catalyst comprising vanadium oxide, added or not with tungsten oxide, supported by titanium dioxide in the form of scales, each scale being one single crystal spaced from the adjacent ones, hereinafter referred to as monodispersed single crystal scales, having linear sizes ranging from 50 Å to 300 Å, surface area greater than 90 $m^2$/g and having no internal porosity; preferably, the vanadium oxide is present in a percentage ranging from 1 to 30 %. The scales are formed by the method of laser pyrolysis and then prepared by impregnation putting them in contact with a solution of a vanadium salt, adding or not a tungsten salt; then, the solvent is evaporated and the obtained powders are calcined at a determined temperature.

More particularly, a continous emission $CO_2$ laser beam irradiates a jet containing metallorganic or inorganic titanium compounds, hereinafter referred to as -titanium compounds-. The jet of titanium compounds is kept spatially defined by a coaxial flow of inert gas, preferably argon. Great absorptions occur in the region of intersection between the laser beam and said flow when the titanium compounds absorb in resonance the laser radiation or when they are mixed with a gas which, like ethylene, has an absorption band ranging from 940 to 1.000 $cm^{-1}$ for absorbing the radiation in resonance and acting as a sensitizer for the transfer of energy to the titanium compounds. In said region high temperatures are reached (500-1500 °C) and the chemical reaction takes place which causes the formation of single crystal particles of titanium dioxide having an anatase structure and sizes ranging from few tens Amstrong to few hundreds Amstrong. The particle sizes may be varied by varying the time period in which the titanium compounds are under the action of the laser beam (residing time) and the laser power. The residing time (comprised in the range 1-40 ms) may be controlled in turn on the basis of the amount of the flow of the titanium compounds and sensitizer gas (50-1.000 sccm, where sccm = standard cubic centimeter per minute), of argon (1.000-10.000 sccm), on the basis of the diameter of the laser beam cross-section (5-20 mm) and of the diameter of the nozzle used for introducing reagents (from 1 to 5 mm). The laser power ranges from 200 to 2.000 W, preferably 500 W. The catalyst is prepared by impregnation putting a given quantity of $TiO_2$, prepared as above described, in contact with a solution of a vanadium salt or a solution of a vanadium salt and a tungsten salt. The solvent is completely evaporated and the powders so obtained are calcined at a determined temperature.

As to the employment of the catalyst prepared as above described, in order to obtain a satisfactory rate of NO removal, the flue gases are supplied to the catalytic area at a spatial speed of 1.000-1.500.000/h, preferably 10.000-110.000/h at the temperature of 150-650 °C, preferably 200-500 °C. In order to obtain a rate of NO removal of at least 80 %, the flue gases are supplied to the catalytic area at the spatial speed ranging from 100.000 to 1.500.000/h in the above mentioned, temperature range.

It will be realized that the main advantage of the invented catalyst consists in the high rate of NO removal from the flue gases.

In order to better understand the invention, specific examples are shown herebelow to describe the method for producing the catalyst and the performances thereof.

Attention is drawn to the fact that the following experimental conditions have been adopted when carrying out the catalytic texts.

A gas containing 2 % of $O_2$, 700 ppm of NO and 700 ppm of $NH_3$ (ppm = parts per million, in volume) is supplied to a catalyst bed under a spatial speed of 1,1 X $10^6$/h at a given temperature. NO concentration is measured at the reactor inlet and outlet so that the rate of NO removal can be quantified as follows:

100 X [(NO)in - (NO)out] / (NO)in

Furthermore, some reference examples are reported herebelow to show how much greater is the efficiency of the vanadium oxide catalysts supported on titanium oxide as obtained according to the invention, in comparison with vanadium oxides supported on commercial titanium oxide.

Examples 1-2

Production of a $TiO_2$ sample having the specific surface of 120 $m^2$/g and the sizes of the single crystal particles smaller than 100 Å:

A mixture of ethylene (300 sccm) and oxygen (70 sccm) draws in the reaction chamber the titanium isopropoxide vapours; the titanium isopropoxide jet, spatially defined by an argon flow (2.000 sccm), is irradiated perpendicularly with the $CO_2$ laser beam having a continous emission, a circular cross section (diameter 8 mm) and incidence power 400 W. The other parameters are: temperature of the reagent liquid: 110 °C; pressure in the isopropoxide container: 285 torr; pressure in the reaction chamber: 215 torr. The powders are calcined in air at T = 500 °C during a time period of one hour and half. In Table 1 the data of NO conversion are indicated.

Examples 3-5

16,9 mg of $NH_4VO_3$ are heat-dissolved in 20 ml of water and, when the solution is at 100 °C, 100 mg of $TiO_2$ prepared as above described are added. The water is evaporated almost completely and the suspension so obtained is dried at 120 °C. The powder so obtained is calcined at 380 °C during a time period of three hours. The surface area of the catalyst so obtained is 81 $m^2$/g.

The catalytic activity is determined at the above indicated experimental conditions, at temperatures of 250 °C, 300 °C, 350 °C. NO conversion is indicated in Schedule 1.

Reference example 1.

16 mg of $NH_4VO_3$ are heat-dissolved in 20 ml of water and, when the solution is at 90 °C, 100 mg of commercial $TiO_2$ are added. The water is evaporated almost completely and the suspension so obtained is dried at 120 °C. The powder so obtained is calcined at 380 °C during a time period of three hours. The surface area of the catalyst so obtained is 35 $m^2$/g.

The catalytic activity is determined at the above indicated experimental conditions at the temperature of 350 °C. NO conversion is indicated in Table 1.

TABLE 1

|  | $V_2O_5$ weight % | Reaction T °C | NO % Conv. |
|---|---|---|---|
| Example 1 | - | 350 | 1,7 |
| Example 2 | - | 400 | 6,4 |
| Example 3 | 10 | 250 | 50 |
| Example 4 | 10 | 300 | 83 |
| Example 5 | 10 | 350 | 66 |
| Ref. example 1 | 10 | 350 | 10 |

4

Examples 6-11

21 mg of $(NH_4)_2WO_4$ and 100 mg of TiO2 prepared according to the example 1 are added to 17 mg of $NH_4VO_3$ heat-dissolved in 20 ml of water. The water is evaporated almost completely and the suspension so obtained is dried at 120 °C. The dried powder is calcined at 400 °C during a time period of four hours in order to obtain a catalyst containing 10 % in weight of $V_2O_5$ and having an atomic ratio V/W = 2. The catalyst superficial area is 77 $m^2$/g. The catalytic activity is determined at the above indicated experimental conditions, at six temperature values comprised in the range 250 °C-450 °C. NO conversion is indicated in Schedule 2.

Reference examples 2-4.

18,4 mg of $(NH_4)_2WO_4$ are added to 14,8 mg of $NH_4VO_3$, heat-dissolved in 20 ml of water and 100 mg of commercial $TiO_2$ are added to this solution. The water is evaporated almost completely and the suspension so obtained is dried at 120 °C. The resulting powder is calcined at 400 °C during a time period of four hours. The catalyst surface area is 10 $m^2$/g. The catalyst activity is determined at the above mentioned experimental conditions, at three temperature values comprised in the range 300 °C -400 °C. The conversion into NO is indicated in Table 2.

TABLE 2

|  | Weight % $V_2O_5$ | Reaction T, °C | NO % Conv. |
|---|---|---|---|
| Example 6 | 10 | 250 | 14 |
| Example 7 | 10 | 300 | 33 |
| Example 8 | 10 | 350 | 43 |
| Example 9 | 10 | 375 | 46 |
| Example 10 | 10 | 400 | 41 |
| Example 11 | 10 | 450 | 37 |
| Ref. Ex. 2 | 10 | 300 | 16 |
| Ref. Ex. 3 | 10 | 350 | 19 |
| Ref. Ex. 4 | 10 | 450 | 18 |

**Claims**

1. A catalyst for reducing nitrogen oxides in the flue gases comprising vanadium oxide or vanadium and tungsten oxides supported on a titanium oxide support, said titanium oxide being in the form of a monodispersed single crystals of anatase having linear sizes in the range of from 50 Å to 300 Å and having no internal porosity, the titanium oxide being obtained by irradiating by means of a continuous emission $CO_2$ laser beam a jet containing metallorganic or inorganic titanium compounds, the laser beam irradiating simultaneously said jet and a sensitizer gas having an absorbtion band ranging from 940 to 1000 $cm^{-1}$ and said jet being kept spatially defined by a coaxial flow of inert gas during a residence time ranging from 1 to 40 ms.

**Patentansprüche**

1. Katalysator zum Verringern von Stickstoffoxyden in Brenngasen mit Vanadium-oder Vanadium-Tungsten-Oxyden, unterstützt durch einen Titanoxydträger in Form von Anatas mit einzelverstreuten Kristallen bei linearen Ausmassen im Bereich von 50 bis 300 Å, ohne innere Durchlässigkeit, wobei das Titanoxyd dadurch zustandekommt, dass ein $CO_2$-Laser andauernd einen Strahl mit metallorganischen oder anorganischen Titanverbindugen aussendet, wobei besagter Laserstrahl gleichzeitig besagten Strahl mit einem sensibilisierenden Gas bei einem Absorptionsbereich von 940 bis 1000 cm-1 aussendet und besagter Strahl durch koaxialen Ausfluss von trägem Gas während einer Verbleibdauer von 1 bis 40 ms räumlich begrenzt erhalten bleibt.

**Revendications**

1. Catalyseur pour réduire oxides d'azote dans les gaz de combustion comprenant oxides de vanadium ou oxides de vanadium et de tungstène supportés par un support d'oxide de titane en forme d'anatase à cristals monodispersés ayant dimensions linéaires variables de 50 A à 300 A et ne presentant pas de porosité intérieure, l'oxide de titane étant obténu en irradiant, par un rayon de laser $CO_2$ à émission continue, un jet comprenant composés de titane métalorganiques ou inorganiques, le rayon laser irradiant dans le même temps le dit jet et un gaz sensibilisateur ayant une bande d'absorption variable de 940 à 1.000 $cm^{-1}$ et le dit jet étant maintenu défini spatialement par un écoulement coaxial de gaz inerte pendant un temps de résidence variable de 1 à 40 ms.